# EUROPEAN PATENT SPECIFICATION

(11) **EP 2 098 795 B1**
(45) Date of publication and mention of the grant of the patent: **04.09.2019**
(21) Application number: 07831038.0
(22) Date of filing: 01.11.2007
(51) Int. Cl.: F24F 1/00, F24F 1/005, F24F 11/00, F24F 1/0011, F24F 13/14

(54) **AIR CONDITIONER**
KLIMAANLAGE
CLIMATISEUR

(30) Priority: 01.11.2006 JP 2006297843
(43) Date of publication of application: 09.09.2009
(73) Proprietor: Daikin Industries, Ltd., Osaka 530-8323 (JP); Panasonic Corporation, Kadoma-shi Osaka 571-8501 (JP)
(72) Inventor: NAKAI, Akinori, Kusatsu-shi, Shiga 525-0044 (JP); MARUOKA, Toshinari, Osaka 540-6207 (JP)
(74) Representative: Hoffmann Eitle
(86) International application number: PCT/JP2007/071304
(87) International publication number: WO 2008/053958

(56) References cited:
- JP-A- 63 194 149
- JP-A- 63 217 160
- JP-A- 2000 199 639
- JP-A- 2001 041 557
- JP-A- 2002 323 250
- JP-B2- 2 953 455
- US-A1- 2001 052 240

## Description

### TECHNICAL FIELD

The present invention relates to air conditioners.

### BACKGROUND ART

There have conventionally been air conditioners each of which includes a floor-mounted indoor unit having air outlets in two directions (see JP 2953455 B, for example).

Also, see JP 2000 199639 A, there is known an air conditioner which prevents occurrence of incompatibility in the movement of flaps in diffusers at two locations when they are swung. When flaps at two locations are selected to be swung, swinging is started right away in the case where diffusers are in a closed state. In the case where both of the flaps are in fixed positions, respectively, one flap is swung at a normal velocity and the other flap is swung at a velocity faster than the former. Further, in the case where only one flap is in a fixed position, the flap is swung at a high velocity and when the positions of both flaps coincide with each other, they are swung at a normal velocity.

Further, see US 2001/0052240 A1, there is known an air outlet opening apparatus for air conditioners. The air outlet opening apparatus includes a shutter for selectively opening and closing the air outlet formed on an air conditioner body.

Further, see JP 20002 323250, there is known an air conditioner capable of reducing propagations of various germs and mold by eliminating the hot and humid state in an indoor unit and an air conditioner, see WO 2008/053958 A1, being provided with an indoor fan driven by a motor, a shutter for opening and closing a lower side outlet, a shutter driving section for driving the shutter, a fan control section for controlling the rotation of the indoor fan, at a shutter control section for controlling the shutter driving section.

This type of air conditioners have such a problem that wind noise like a whistle is generated when the outlets are switched over from one directional mode to two directional mode and vice versa while air blowing is maintained during cooling operation or heating operation, more specifically, immediately before one of the outlets is fully closed or immediately after the outlet is opened from the closed state. This is because an opening area of the outlet becomes smaller.

Also, this type of air conditioners have such a problem to be solved that a drive motor having a large torque is required for driving a shutter for each of the outlets. The reason for this is that the load of the drive motor increases since the shutter is driven amidst air flow.

### SUMMARY OF INVENTION

### INVENTION TO SOLVE PROBLEM

An object of the present invention is to provide an air conditioner capable of reducing wind noise at the time of opening or closing a shutter.

Another object of the invention is to provide an air conditioner capable of decreasing torque of a shutter driving motor at the time of opening or closing the shutter, and thereby reducing costs.

### SOLUTION TO PROBLEM

In order to achieve the above-mentioned objects, one aspect of the present invention provides an air conditioner according to claim 1, comprising:
an air blasting fan driven by a motor;
a plurality of outlets for blowing off air-conditioned air from the fan;
a shutter for opening and closing at least one of the outlets;
a shutter driving section for driving the shutter;
a fan control section for controlling a rotation speed of the fan via the motor; and
a shutter control section for controlling the shutter driving section, wherein
when the rotating speed of the fan is a prescribed rotation speed or higher at a time of opening or closing the shutter in operation of the fan, the shutter driving section is controlled by the shutter control section in such a way that the shutter is opened and closed at a high speed in a first section and at a low speed lower than the high speed in a second section, wherein the first section is a portion of an opening/closing section ranged from a fully closed position to a fully opened position of the shutter 30 and is located on a side of the fully closed position, and wherein the second section is a residual portion of the opening/closing section and is located on a side of the fully opened position, and
when the rotating speed of the fan is lower than the prescribed rotation speed at the time of opening or closing the shutter in operation of the fan, the shutter driving section is controlled by the shutter control section (11b) in such a way that the shutter is opened and closed at a low speed or at a high speed in the opening/closing section.

According to the above-configured air conditioner, when the rotating speed of the fan is a prescribed rotation speed or higher at a time of opening or closing the shutter in operation of the fan, the shutter driving section is controlled by the shutter control section in such a way that the shutter is opened and closed at a high speed in a first section and at a low speed in a second section, wherein the first section is a portion of an opening/closing section ranged from a fully closed position to a fully opened position of the shutter and is located on a side of the fully closed position, and wherein the second section is a residual portion of the opening/closing section and is located on a side of the fully opened position. Meanwhile, when the rotating speed of the fan is lower than the prescribed rotation speed at the time of opening or closing the shutter in operation of the fan, the shutter driving section is controlled by the shutter control section in such a way that the shutter is opened and closed at a low speed or at a high speed in the opening/closing section. Accordingly, when an air velocity of the blow-off air is high, the shutter is operated at the high speed so as to be promptly opened or closed in the first section where an opening area of the outlet becomes smaller. As the result, it is possible to reduce wind noise in opening and closing of the shutter.

In one embodiment of the invention, at the time of opening or closing the shutter in operation of the fan, the rotation speed of the fan is controlled by the fan control section in such a way that the rotation speed of the fan becomes lower than a present rotation speed.

According to the embodiment, torque of a shutter driving motor at the time of opening or closing the shutter can be decreased and thereby costs can be reduced. This is because, at the time of opening or closing the shutter in operation of the fan, the rotation speed of the fan is controlled by the fan control section in such a way that the rotation speed of the fan becomes lower than a present rotation speed.

As is clear from the above, according to the air conditioner of the invention, wind noise at the time of opening or closing the shutter can be reduced.

Also, according to the air conditioner in one embodiment, at the time of opening or closing the shutter during operation, the rotation speed of the fan is controlled by the fan control section in such a way that the rotation speed of the fan becomes lower than a present rotation speed. As a result, torque of the shutter driving motor at the time of opening or closing the shutter can be decreased and thereby costs can be reduced.

Further, sound at the time of opening or closing the shutter becomes unnoticeable since the wind noise itself becomes small when the rotation speed of the fan is decreased.

### BRIEF DESCRIPTION OF DRAWINGS

Fig. 1 shows a refrigerant circuit diagram of an air conditioner;
Fig. 2 shows a perspective view of an indoor unit of the air conditioner;
Fig. 3 shows a cross sectional view of the indoor unit of the air conditioner;
Fig. 4A shows a schematic diagram for explaining a shutter action when an indoor fan rotates at a high speed in the air conditioner;
Fig. 4B shows a schematic diagram for explaining a shutter action when the indoor fan rotates at a low speed in the air conditioner;
Fig. 5 shows a flowchart for explaining opening/closing action of the shutter controlled by a control device during heating operation of the air conditioner; and
Fig. 6 shows another flowchart for explaining opening/closing action of the shutter controlled by the control device during heating operation of the air conditioner.

### DESCRIPTION OF EMBODIMENTS

Hereinbelow, embodiments of the present invention on an air conditioner will be described in detail with reference to drawings.

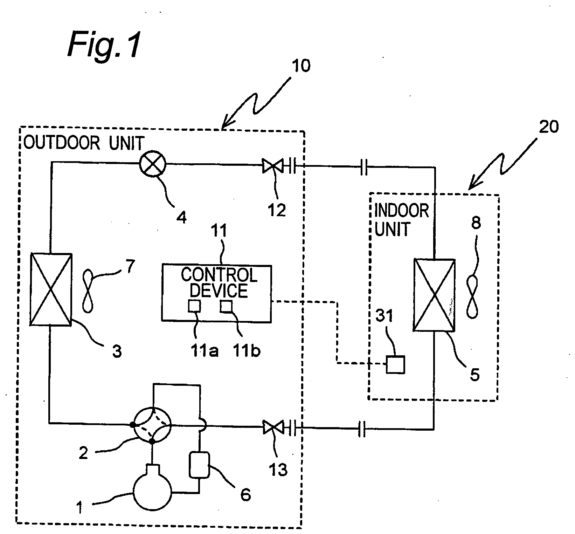

Fig. 1 shows a refrigerant circuit diagram of the air conditioner as one embodiment of the invention. As shown in Fig. 1, the air conditioner has a compressor 1, a four-way valve 2 one end of which is connected to a discharge side of the compressor 1, an outdoor heat exchanger 3 one end of which is connected to another end of the four-way valve 2, an electric expansion valve 4 one end of which is connected to the other end of the outdoor heat exchanger 3, an indoor heat exchanger 5 one end of which is connected to the other end of the electric expansion valve 4 via a closing valve 12, and an accumulator 6 one end of which is connected to the other end of the indoor heat exchanger 5 via a closing valve 13 and the four-way valve 2 while the other end of the accumulator 6 is connected to a suction side of the compressor 1. A refrigerant circuit is formed by the compressor 1, the four-way valve 2, the outdoor heat exchanger 3, the electric expansion valve 4, the indoor heat exchanger 5 and the accumulator 6.

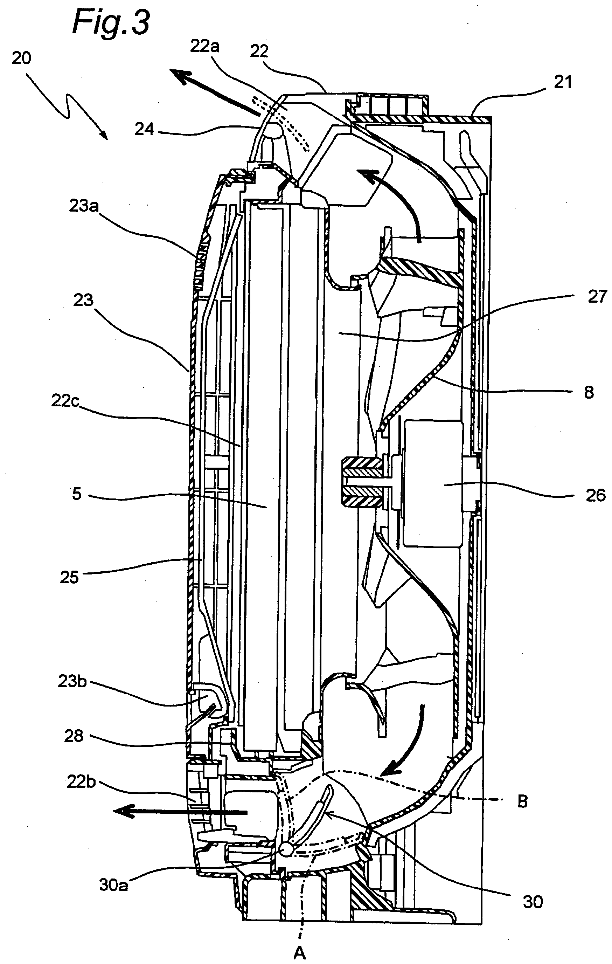

The air conditioner further has an outdoor fan 7 placed in the vicinity of the outdoor heat exchanger 3, an indoor fan 8 placed in the vicinity of the indoor heat exchanger 5, a shutter driving section 31 for driving a shutter 30 (shown in Fig. 3), and a control device 11 for controlling the compressor 1, the electric expansion valve 4, the outdoor fan 7, the indoor fan 8, the shutter driving section 31 and the like.

The control device 11 is formed by a microcomputer, an input/output circuit and the like. The control device 11 has a fan control section 11a for controlling a rotation speed of the indoor fan 8 and a shutter control section 11b for controlling the shutter driving section 31. The rotation speed is herein defined as rotational frequency per unit time.

An outdoor unit 10 is formed by the compressor 1, the four-way valve 2, the outdoor heat exchanger 3, the electric expansion valve 4, the accumulator 6, the outdoor fan 7, and the control device 11. An indoor unit 20 is formed by the indoor heat exchanger 5, the indoor fan 8, and the shutter driving section 31.

In heating operation of the air conditioner having the above configuration, when the compressor 1 is started after the four-way directional control valve 2 is switched to a switch position shown by a solid line, a high pressure refrigerant discharged from the compressor 1 goes into the indoor heat exchanger 5 via the four-way directional control valve 2. Then, the refrigerant is condensed by the indoor heat exchanger 5, decompressed by the electric expansion valve 4, and goes into the outdoor heat exchanger 3. The refrigerant is evaporated in the outdoor heat exchanger 3 and returns to the suction side of the compressor 1 via the four-way directional control valve 2 and the accumulator 6. In this way, to implement a refrigerating cycle, the refrigerant circulates through the refrigerant circuit which is formed by the compressor 1, the indoor heat exchanger 5, the electric expansion valve 4, the outdoor heat exchanger 3 and the accumulator 6. Indoor air is circulated through the indoor heat exchanger 5 by the indoor fan 8, and thereby the indoor room is heated.

On the other hand, in cooling operation, the four-way directional control valve 2 is switched to a switch position shown by a dotted line. The refrigerating cycle is implemented by circulation of the refrigerant in order of the compressor 1, the outdoor heat exchanger 3, the electric expansion valve 4, the indoor heat exchanger 5, and the accumulator 6.

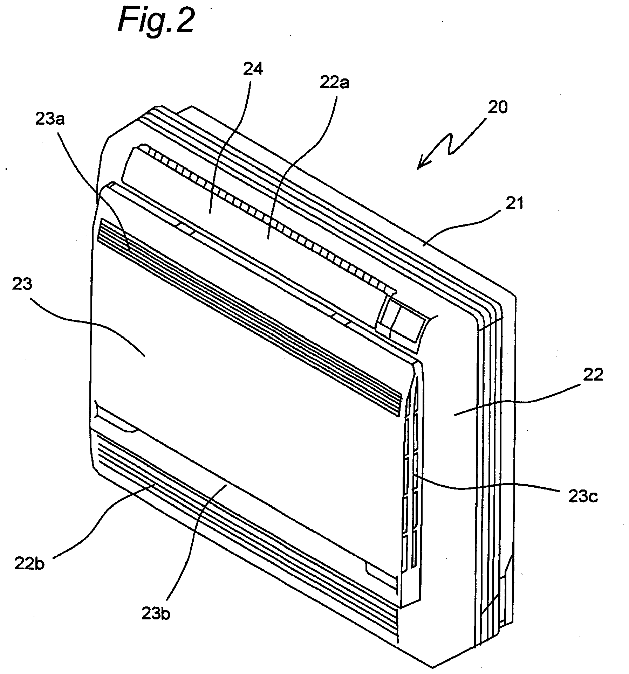

Fig. 2 shows a perspective view of the indoor unit 20 of the air conditioner. The indoor unit 20 has a base frame 21, a front grill 22 and a front panel 23, as shown in Fig. 2, wherein the base frame 21 has a generally rectangular shape whose rear-face side is mounted on an indoor wall surface, wherein the front grill 22 is mounted on the front side of the base frame 21 and has a generally rectangular-shaped opening 22c (shown in Fig. 3), and wherein the front panel 23 is mounted so as to cover the opening 22c (shown in Fig. 3) of the front grill 22.

An upper side outlet 22a is provided in the upper part of the front grill 22. A lower side outlet 22b is provided in the lower part of the front grill 22. The upper side outlet 22a of the front grill 22 is equipped with a flap 24. The flap 24 rotates during cooling and heating operations to respectively blow off cool and warm air from the upper side outlet 22a in the obliquely upward forward direction. At the time of stoppage, the flap 24 covers the upper side outlet 22a, as shown in Fig. 2.

An upper side inlet 23a is provided on the upper side of the front panel 23. A lower side inlet 23b is provided on the lower side of the front panel 23. Further, lateral inlets 23c are provided on the right and left sides of the front panel 23 (Fig. 2 shows only a right-side inlet).

Fig. 3 shows a cross sectional view of the indoor unit 20 of the air conditioner. As shown in Fig. 3, a motor 26 is fixed onto a generally central portion of the base frame 21. The indoor fan 8 is placed on the base frame 21 so as to be connected to a shaft of the motor 26 which is oriented in an anteroposterior direction. The indoor fan 8 is a turbo fan for blowing off air, which is sucked from the front side, in the outward radial direction with respect to the shaft. A bell mouth 27 is provided in the base frame 21 on the front side of the indoor fan 8. The indoor heat exchanger 5 is placed on the front side of the bell mouth 27. The front grill 22 is mounted on the front side of the indoor heat exchanger 5. The front panel 23 is mounted on the front side of the front grill 22. The opening 22c of the front grill 22 is equipped with a filter 25. A drain pan 28 is placed in the lower part of the bell mouth 27.and on the lower side of the indoor heat exchanger 5.

The shutter 30 for opening and closing the lower side outlet 22b is placed inside a blow-off passage located on the lower side of the front grill 22. The shutter 30 is rotated around a shaft 30a by the shutter driving section 31 (shown in Fig. 1), wherein the shaft 30a is provided on the bottom frame 21. "A" is a fully opened state whereas "B" is a fully closed state in Fig. 3, where both "A" and "B" are shown by alternate long and short dash lines.

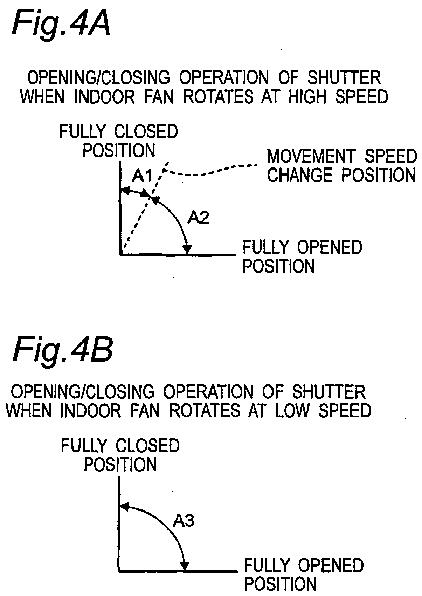

Figs. 4A and 4B are schematic views for explaining operations of the shutter in the air conditioner. Fig. 4A shows the opening/closing operation of the shutter 30 when the indoor fan 8 rotates at a high speed. On the other hand, Fig. 4B shows the opening/closing operation of the shutter 30 when the indoor fan 8 rotates at a low speed.

When the indoor fan 8 rotates at a high speed, the shutter 30 is opened and closed at a high speed in a first section "A1" whereas at a low speed in a second section "A2", as shown in Fig. 4A, wherein the first section "A1" is a portion of an opening/closing section ranged from the fully closed position to the fully opened position of the shutter 30 and is located on the side of the fully closed position of the shutter 30, and wherein the second section "A2" is a residual portion of the opening/closing section and is located on the side of the fully opened position of the shutter 30.

When the indoor fan 8 rotates at a low speed, as shown in Fig. 4B, the opening/closing operation of the shutter 30 is conducted at a low speed (or a high speed) in the opening/closing section "A3" ranged from the fully closed position to the fully opened position of the shutter 30.

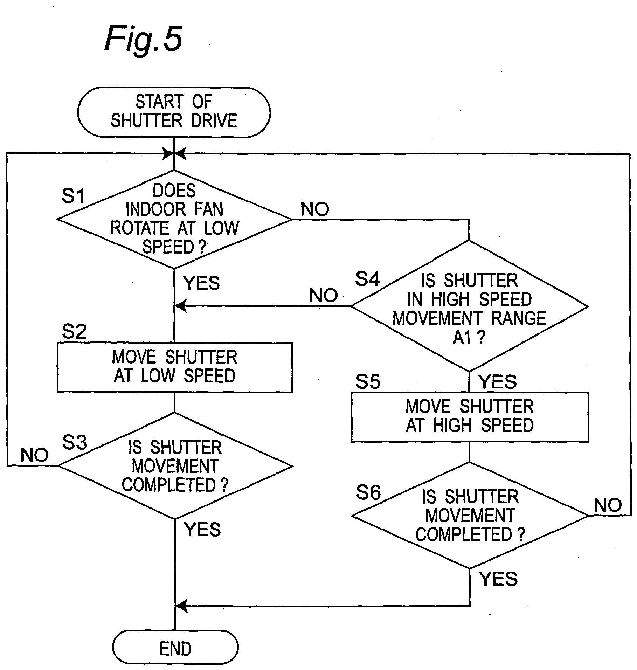

Description is now given on the operation of opening/closing control of the shutter 30 with reference to the flowchart of Fig. 5, which control is conducted by the control device 11 of the air conditioner during heating operation. It should be noted that the flowchart shown in Fig. 5 can be applied to both opening operation and closing operation.

First, upon start of heating operation, it is determined in Step S1 whether or not the indoor fan 8 is at a low speed. In other words, it is determined whether or not a rotation speed of the indoor fan 8 is a prescribed rotation speed or lower.

If it is determined that the indoor fan 8 is at a low speed in Step S1, then go to Step S2 where the shutter 30 is moved at the low speed.

Next, go to Step S3 where it is determined whether or not movement of the shutter 30 is completed. If the movement of the shutter 30 is not completed, return to Step S1. On the other hand, if the movement of the shutter 30 is completed, end the operation.

If it is determined in Step S1 that the indoor fan 8 is not at a low speed, that is, if it is determined that the rotation speed of the indoor fan 8 is a prescribed rotation speed or higher, then go to Step S4.

Next, it is determined in Step S4 whether or not the shutter 30 is within a high speed movement range A1 (shown in Fig. 4A). If it is determined in Step S4 that the shutter 30 is within the high speed movement range A1, then go to Step S5. If it is determined that the shutter 30 is not within the high speed movement range A1, then go to Step S2.

In Step S5, the shutter 30 is moved at a high speed, and thereafter go to Step S6.

In Step S6, it is determined whether or not the movement of the shutter 30 is completed. If the movement of the shutter 30 is not completed, then return to Step S1. On the other hand, if the movement of the shutter 30 is completed, then end the operation.

Thus, when the rotating speed of the indoor fan 8 is a prescribed rotation speed or higher at the time of opening or closing of the shutter 30 in operation of the fan 8, the shutter driving section 31 is controlled by the shutter control section 11b in such a way that the shutter 30 is opened and closed at a high speed in the first section "A1" and at a low speed in the second section "A2", wherein the second section "A2" is a residual portion of the opening/closing section ranged from the fully closed position to the fully opened position of the shutter 30. On the other hand, when the rotation speed of the indoor fan 8 is lower than the prescribed rotation speed at the time of opening or closing the shutter 30 in operation of the fan 8, the shutter driving section 31 is controlled by the shutter control section 11b in such a way that the shutter 30 is opened and closed at a low speed.

However, when the rotation speed of the indoor fan 8 is lower than the prescribed rotation speed, the shutter 30 may be opened and closed at a high speed since the blow-off air velocity is low.

Thereby, the wind noise can be reduced at the time of opening or closing the shutter 30.

Also, at the time of opening or closing the shutter 30 in operation, the rotation speed of the indoor fan 8 may be controlled by the fan control section 11a in such a way that the rotation speed of the indoor fan 8 becomes lower than a present rotation speed. Thereby, the torque of the shutter driving motor 26 can be decreased at the time of opening or closing the shutter 30, so that cost reduction can be achieved.

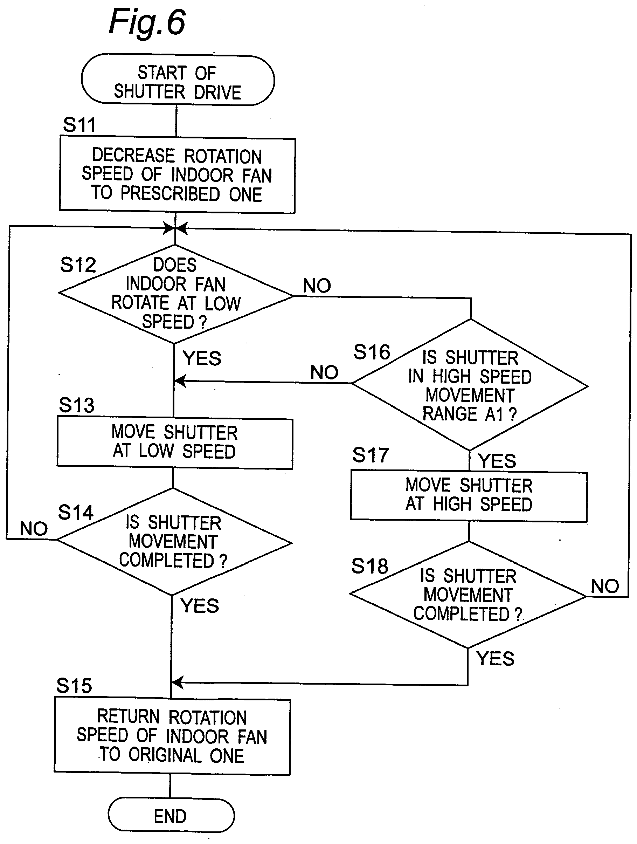

With reference to the flowchart of Fig. 6, explanation will be given on the operation of the opening and closing control of the shutter 30 by the control device 11 during operation in this case.

First, upon start of heating operation, the rotation speed of the indoor fan 8 is decreased from a present rotation speed to a prescribed rotation speed.

Next, in Step S12, it is determined whether or not the indoor fan 8 is at a low speed. If it is determined that the indoor fan 8 is at a low speed, then go to Step S13 where the shutter 30 is moved at a low speed.

Next, go to Step S14 where it is determined whether or not the movement of the shutter 30 is completed. If the movement of the shutter 30 is not completed, then return to Step S12. If the movement of the shutter 30 is completed, then go to Step S15.

In Step S12, if it is determined that the indoor fan 8 is not at a low speed, then go to Step S16 where it is determined whether or not the shutter 30 is within a high speed movement range A1 (shown in Fig. 4A). If it is determined in Step S16 that the shutter 30 is within the high speed movement range A1, then go to Step S17. If it is determined that the shutter 30 is not within the high speed movement range A1, then go to Step S13.

In Step S17, the shutter 30 is moved at a high speed. Thereafter, go to Step S18.

Next, in Step S18, it is determined whether or not the movement of the shutter 30 is completed. If the movement of the shutter 30 is not completed, then return to Step S12. If the movement of the shutter 30 is completed, then go to Step S15.

In Step S15, the rotation speed of the indoor fan 8 is returned to the original speed. Thereafter, end the operation.

In the embodiments, the floor-mounted type air conditioner has been employed and explained above. However, the air conditioner of the present invention is not limited thereto. Any types of air conditioners may be used if they have a refrigerant circuit for at least the heating operation and a plurality of outlets.

Also, in the embodiments, the separate-type air conditioner having exterior and indoor units has been employed and explained above. However, the present invention may be applied to air conditioners of other configurations.

In the air conditioner according to the present invention, as described above, when the indoor fan 8 rotates at a high speed (that is, when the rotation speed is a prescribed rotation speed or higher), the opening/closing operation of the shutter 30 is conducted at a high speed in the first section and at a low speed in the second section, wherein the first section is a portion of the opening/closing section ranged from the fully closed position to the fully opened position of the shutter 30 and is located on the side of the fully closed position of the shutter 30, and wherein the second section is a residual portion of the opening/closing section and is located on the side of the fully opened position of the shutter 30. Also, when the indoor fan 8 rotates at a low speed (that is, when the rotation speed is lower than a prescribed rotation speed), the opening/closing operation of the shutter 30 is conducted at a low speed (or a high speed) in the opening/closing section ranged from the fully closed position to the fully opened position of the shutter 30. However, according to an embodiment not covered by the claims, the opening/closing speed of the shutter need not necessarily be changed. Instead of changing the opening/closing speed, the rotation speed of the fan may be changed into a lower one than a present rotation speed by the fan control section when the shutter is opened or closed by the shutter control section. Thereby, torque of the shutter driving motor can be decreased at the time of opening or closing the shutter, so that costs can be reduced.

## Claims

1. An air conditioner, comprising:
an air blasting fan (8) driven by a motor (26);
a plurality of outlets (22a, 22b) for blowing off air-conditioned air from the fan (8);
a shutter (30) for opening and closing at least one of the outlets (22a, 22b);
a shutter driving section (31) for driving the shutter (30) ;
a fan control section (11a) for controlling a rotation speed of the fan (8) via the motor (26); and
a shutter control section (11b) for controlling the shutter driving section (31), **characterized in that** the shutter control section (11b) is configured such that,
when the rotating speed of the fan (8) is a prescribed rotation speed or higher at a time of opening or closing the shutter (30) in operation of the fan (8), the shutter driving section (31) is controlled by the shutter control section (11b) in such a way that the shutter (30) is opened and closed at a high speed in a first section (A1) and at a low speed lower than the high speed in a second section (A2), wherein the first section (A1) is a portion of an opening/closing section ranged from a fully closed position to a fully opened position of the shutter (30) and is located on a side of the fully closed position, and wherein the second section (A2) is a residual portion of the opening/closing section and is located on a side of the fully opened position, and
when the rotating speed of the fan (8) is lower than the prescribed rotation speed at the time of opening or closing the shutter (30) in operation of the fan (8), the shutter driving section (31) is controlled by the shutter control section (11b) in such a way that the shutter (30) is opened and closed at a low speed or at a high speed in the opening/closing section.

2. The air conditioner set forth in claim 1, wherein
at the time of opening or closing the shutter (30) in operation of the fan (8), the rotation speed of the fan (8) is controlled by the fan control section (11a) in such a way that the rotation speed of the fan (8) becomes lower than a present rotation speed.

## Patentansprüche

1. Klimaanlage, umfassend:
ein Luftstoßgebläse (8), das von einem Motor (26) angetrieben wird;
eine Vielzahl an Auslässen (22a, 22b) zum Ausblasen von klimatisierter Luft aus dem Gebläse (8);
einen Verschluss (30) zum Öffnen und Schließen mindestens eines der Auslässe (22a, 22b);
einen Verschlussantriebsabschnitt (31) zum Antreiben des Verschlusses (30);
einen Gebläsesteuerabschnitt (11a) zum Steuern einer Drehgeschwindigkeit des Gebläses (8) über den Motor (26); und
einen Verschlusssteuerabschnitt (11b) zum Steuern des Verschlussantriebsabschnitts (31), **dadurch gekennzeichnet, dass** der Verschlusssteuerabschnitt (11b) so konfiguriert ist, dass
wenn die Drehgeschwindigkeit des Gebläses (8) zu einer Zeit vom Öffnen und Schließen des Verschlusses (30) in Betrieb des Gebläses (8) eine vorgeschriebene Drehgeschwindigkeit oder höher ist, der Verschlussantriebsabschnitt (31) vom Verschlusssteuerabschnitt (11b) auf solch eine Weise gesteuert wird, dass der Verschluss (30) bei einer Hochgeschwindigkeit in einem ersten Abschnitt (A1) und bei einer Niedergeschwindigkeit, niedriger als die Hochgeschwindigkeit, in einem zweiten Abschnitt (A2) geöffnet und geschlossen wird, wobei der erste Abschnitt (A1) ein Teil eines Öffnungs-/Schließabschnitts ist, der von einer vollständig geschlossenen Position zu einer vollständig geöffneten Position des Verschlusses (30) reicht und an einer Seite der vollständig geschlossenen Position liegt, und wobei der zweite Abschnitt (A2) ein restlicher Teil des Öffnungs-/Schließabschnitts ist und an einer Seite der vollständig geöffneten Position liegt, und
wenn die Drehgeschwindigkeit des Gebläses (8) zu der Zeit vom Öffnen und Schließen des Verschlusses (30) in Betrieb des Gebläses (8) niedriger als die vorgeschriebene Drehgeschwindigkeit ist, der Verschlussantriebsabschnitt (31) vom Verschlusssteuerabschnitt (11b) auf solch eine Weise gesteuert wird, dass der Verschluss (30) bei einer Niedergeschwindigkeit oder bei einer Hochgeschwindigkeit im Öffnungs-/Schließabschnitt geöffnet und geschlossen wird.

2. Klimaanlage nach Anspruch 1, wobei
zur Zeit vom Öffnen und Schließen des Verschlusses (30) in Betrieb des Gebläses (8) die Drehgeschwindigkeit des Gebläses (8) vom Gebläsesteuerabschnitt (11a) auf solch eine Weise gesteuert wird, dass die Drehgeschwindigkeit des Gebläses (8) niedriger als eine gegenwärtige Drehgeschwindigkeit wird.

## Revendications

1. Climatiseur comprenant:
un ventilateur de soufflage d'air (8) entraîné par un moteur (26) ;
une pluralité de sorties (22a, 22b) pour souffler de l'air climatisé à partir du ventilateur (8) ;
un obturateur (30) pour ouvrir et fermer au moins l'une des sorties (22a, 22b) ;
une section d'entraînement d'obturateur (31) pour entraîner l'obturateur (30) ;
une section de commande de ventilateur (11a) pour commander une vitesse de rotation du ventilateur (8) via le moteur (26) ; et
une section de commande d'obturateur (11b) pour commander la section d'entraînement d'obturateur (31), **caractérisé en ce que** la section de commande d'obturateur (11b) est configurée de telle sorte que,
lorsque la vitesse de rotation du ventilateur (8) est égale ou supérieure à une vitesse de rotation prescrite au moment de l'ouverture ou de la fermeture de l'obturateur (30) au cours du fonctionnement du ventilateur (8), la section d'entraînement d'obturateur (31) est commandée par la section de commande d'obturateur (11b) de telle sorte que l'obturateur (30) est ouvert et fermé à une vitesse élevée dans une première section (A1) et à une vitesse lente inférieure à la vitesse élevée dans une seconde section (A2), dans lequel la première section (A1) est une partie d'une section d'ouverture/fermeture située dans une plage allant d'une position complètement fermée à une position complètement ouverte de l'obturateur (30) et est située sur un côté de la position complètement fermée, et dans lequel la seconde section (A2) est une partie résiduelle de la section d'ouverture/fermeture et est située sur un côté de la position complètement ouverte, et
lorsque la vitesse de rotation du ventilateur (8) est inférieure à la vitesse de rotation prescrite au moment de l'ouverture ou de la fermeture de l'obturateur (30) au cours du fonctionnement du ventilateur (8), la section d'entraînement d'obturateur (31) est commandée par la section de commande d'obturateur (11b) de telle sorte que l'obturateur (30) soit ouvert et fermé à une vitesse lente ou à une vitesse élevée dans la section d'ouverture/fermeture.

2. Climatiseur selon la revendication 1, dans lequel
au moment de l'ouverture ou de la fermeture de l'obturateur (30) au cours du fonctionnement du ventilateur (8), la vitesse de rotation du ventilateur (8) est commandée par la section de commande de ventilateur (11a) de telle sorte que la vitesse de rotation du ventilateur (8) devient inférieure à la vitesse de rotation actuelle.
